(19) **Europäisches Patentamt / European Patent Office / Office européen des brevets**

(11) **EP 4 626 106 A1**

(12) **EUROPEAN PATENT APPLICATION**
published in accordance with Art. 153(4) EPC

(43) Date of publication:
01.10.2025 Bulletin 2025/40

(21) Application number: 24838570.0

(22) Date of filing: 24.06.2024

(51) International Patent Classification (IPC):
*H04W 72/044* (2023.01)

(52) Cooperative Patent Classification (CPC):
H04W 52/34; H04W 52/36; H04W 72/044;
H04W 72/50

(86) International application number:
PCT/CN2024/100959

(87) International publication number:
WO 2025/011314 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.07.2023 CN 202310861575

(71) Applicant: ZTE Corporation
Shenzhen, Guangdong 518057 (CN)

(72) Inventors:
• BI, Feng
Shenzhen, Guangdong 518057 (CN)

• XING, Weimin
Shenzhen, Guangdong 518057 (CN)
• LU, Youxiong
Shenzhen, Guangdong 518057 (CN)
• MIAO, Ting
Shenzhen, Guangdong 518057 (CN)
• CHEN, Jie
Shenzhen, Guangdong 518057 (CN)
• HE, Haigang
Shenzhen, Guangdong 518057 (CN)
• HU, Yuzhou
Shenzhen, Guangdong 518057 (CN)

(74) Representative: Savi, Massimiliano et al
Notarbartolo & Gervasi S.p.A.
Viale Achille Papa, 30
20149 Milano (IT)

(54) **POWER DETERMINATION METHOD, APPARATUS, AND SYSTEM**

(57) Disclosed in the present application are a power determination method, apparatus, and system. The power determination method comprises: when the total transmission power of a plurality of carriers exceeds the maximum transmission power of a device, determining, according to the number of sidelinks transmitted by the device, the transmission power of the sidelinks.

FIG. 1

**Description**

**CROSS-REFERENCE TO RELATED APPLICATION**

This application is filed on the basis of Chinese patent application No. 202310861575.1 filed July 12, 2023, and claims priority to the Chinese patent application, the entire contents of which are incorporated herein by reference.

**TECHNICAL FIELD**

The present disclosure relates to the technical field of wireless communication, and in particular to a power determination method, apparatus, and system.

**BACKGROUND**

With the continuous advancement of radio technologies, various radio services have emerged in large numbers. In New Radio (NR) systems involving Vehicle to anything (V2X) deployment scenarios, carrier aggregation (CA) needs to be considered. If each carrier in CA uses a high or maximum transmit power, the total transmit power of a device will exceed a maximum power of the device, resulting in power limitation.

**SUMMARY**

The following is a summary of the subject matter set forth in the description. This summary is not intended to limit the scope of protection of the claims.

Embodiments of the present disclosure provide a power determination method, apparatus, and system, to ensure that transmit power determination and adjustment can be implemented in a CA scenario.

In accordance with a first aspect of the present disclosure, an embodiment provides a power determination method, including:

determining, according to a number of sidelinks transmitted by a device, a transmit power of the sidelinks, in response to a total transmit power of a plurality of carriers exceeding a maximum transmit power of the device.

In accordance with a second aspect of the present disclosure, an embodiment provides a power determination system, including a power determination apparatus configured for determining, according to a number of sidelinks transmitted by a device, a transmit power of the sidelinks, in response to a total transmit power of a plurality of carriers exceeding a maximum transmit power of the device.

In accordance with a third aspect of the present disclosure, an embodiment provides a power determination apparatus, including at least one processor and a memory communicatively connected to the at least one processor, where the memory stores instructions executable by the at least one processor which, when executed by the at least one processor, cause the at least one processor to implement the power determination method of the first aspect.

In accordance with a fourth aspect of the present disclosure, an embodiment provides a computer-readable storage medium, storing computer-executable instructions which, when executed by a computer, cause the computer to implement the power determination method.

In the power determination method, apparatus, and system provided by the embodiments of the present disclosure, when carrier aggregation is performed in a V2X scenario, a total transmit power of a plurality of carriers is determined according to a maximum transmit power of a device, thereby avoiding the problem that the total transmit power of the plurality of carriers exceeds the maximum transmit power of the device due to the use of a high or maximum transmit power for each carrier.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

**BRIEF DESCRIPTION OF DRAWINGS**

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is an overall flowchart of a power determination method according to an embodiment of the present disclosure;

FIG. 2 is a flowchart of determining a number of transmitted sidelinks according to an embodiment of the present disclosure;

FIG. 3 is a flowchart of discarding a sidelink according to priority values of the sidelinks according to an embodiment of the present disclosure;

FIG. 4 is a flowchart of determining a transmit power of a carrier according to an embodiment of the present disclosure; and

FIG. 5 is a schematic diagram showing structural connections in a power determination apparatus according to an embodiment of the present disclosure.

## DETAILED DESCRIPTION

To make the objects, technical schemes, and advantages of the present disclosure clearer, the present disclosure is described in further detail in conjunction with accompanying drawings and embodiments. It should be understood that the specific embodiments described herein are merely used for illustrating the present disclosure, and are not intended to limit the present disclosure.

A link in V2X service communication is referred to as a sidelink (SL), which is called LTE V2X, LTE-V, or LTE sidelink in Long Term Evolution (LTE), and called NR V2X, NR-V, or NR sidelink in NR. Main channels of a sidelink include a physical sidelink control channel (PSCCH) and a physical sidelink shared channel (PSSCH). The PSCCH carries sidelink control information. The PSSCH carries service data. When a service that needs to be transmitted between devices, service data between the devices is directly transmitted from a data source device to a destination device without being forwarded by other network devices, i.e., the devices directly communicate with each other. Such devices are User Equipment (UEs) having a V2X function.

In NR systems involving V2X deployment scenarios, carrier aggregation needs to be considered. If each carrier in carrier aggregation uses a high or maximum transmit power, the total transmit power of a device will exceed a maximum power of the device, resulting in power limitation.

In view of the above, embodiments of the present disclosure provide a power determination method, apparatus, and system. The power determination method includes: determining, according to a number of sidelinks transmitted by a device, a transmit power of the sidelinks when a total transmit power of a plurality of carriers exceeds a maximum transmit power of the device.

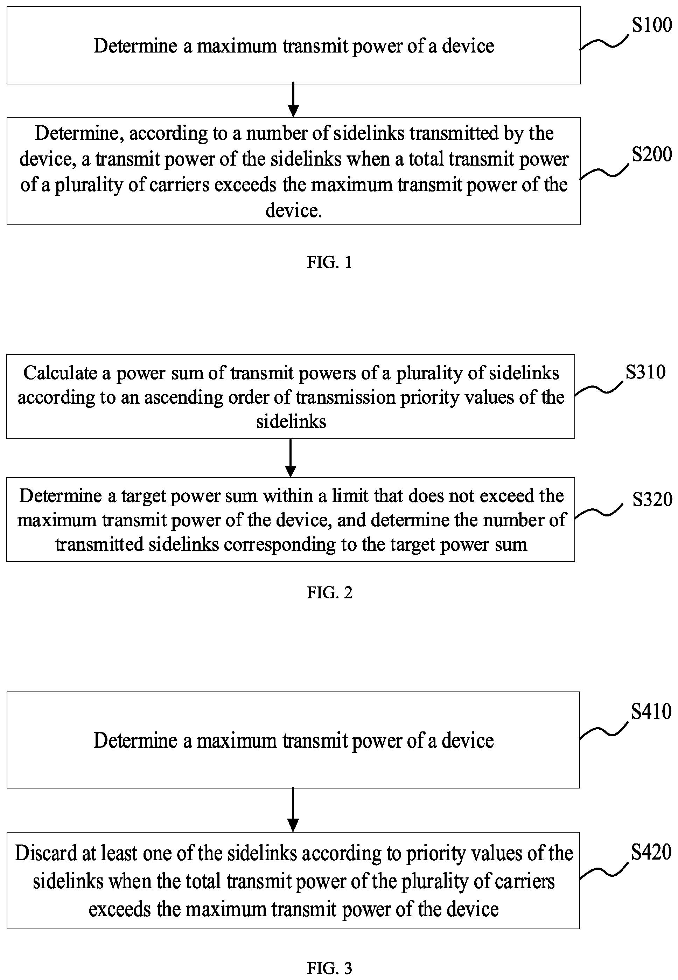

Referring to FIG. 1, an embodiment of the present disclosure provides a power determination method. In a V2X deployment scenario, a device performs carrier aggregation and performs power control on a carrier to be transmitted to determine a power of the carrier. The power determination method includes, but not limited to, the following steps.

In a step of S100, a maximum transmit power of a device is determined.

In a step of S200, a transmit power of the sidelinks is determined according to a number of sidelinks transmitted by the device when a total transmit power of a plurality of carriers exceeds the maximum transmit power of the device.

The device allocates a transmit power for each carrier in carrier aggregation and uses a sidelink to carry the carrier. An NR sidelink supports single-carrier transmission, and the device uses a sidelink to carry the corresponding carrier to send out data. When no power control is performed on carriers, a transmit power of each carrier is a maximum power value of the carrier or a maximum power value calculated according to a channel busy ratio, and a total transmit power of a plurality of carriers may exceed the maximum transmit power of the device. In this case, power reduction or adjustment is required to determine the transmit power of the carrier. In the embodiments of the present disclosure, according to the number of sidelinks transmitted by the device, a power is allocated to a carrier corresponding to each sidelink, i.e., a transmit power of each sidelink is determined.

The plurality of carriers constitute a carrier set. The carrier set includes one or more carriers. At least part of the carriers have a power control parameter, and the other carriers do not have the power control parameter. Each of the carriers having the power control parameter can be transmitted according to a configured power. Each of the carriers not having the power control parameter is allocated with a transmit power according to a certain mode, instead of directly using the maximum power value of the carrier or the maximum power value of the carrier at the channel busy ratio, to prevent the total transmit power of the carriers from exceeding the maximum transmit power of the device. It can be understood that the carriers having the power control parameter constitute a first carrier set, the carriers not having the power control parameter constitute a second carrier set, and at least one of the first carrier set or the second carrier set is not empty, i.e., the entire carrier set may include only carriers having the power control parameter, include only carriers not having the power control parameter, or include both carriers having the power control parameter and carriers not having the power control parameter.

The power control parameter includes a first power parameter and/or a second power parameter, the first power parameter is used for representing a power value for power control based on a downlink path loss, and the second power parameter is used for representing a power value for power control based on a sidelink path loss. The power control parameter of the carrier in the first carrier set is provided or configured. The first power parameter may be a P0 value corresponding to power control of the carrier based on a downlink pathloss, i.e., dl-P0-PSSCH-PSCCH. In this case, dl-P0-PSSCH-PSCCH is a power control parameter provided or configured. The second power parameter may be a P0 value corresponding to power control of the carrier based on a sidelink pathloss, i.e., sl-P0-PSSCH-PSCCH. In this case, sl-P0-PSSCH-PSCCH is a power control parameter provided or configured. A transmit power of a sidelink corresponding to a carrier in the first carrier set is determined according to at least a path loss, which may be a downlink pathloss or a sidelink pathloss. The transmit power of the sidelink corresponding to the carrier in the first carrier set may also be determined according to other parameters, which will be described in detail later.

In some embodiments, a transmit power of a carrier in the second carrier set may be determined by configuration, preconfiguration, or allocation. In some embodiments, the power determination method further includes:

determining a transmit power of a carrier in the second carrier set according to a first preset parameter;
or

determining an available transmit power of the device and allocating the available transmit power to a carrier in the second carrier set according to a second preset parameter,

where the available transmit power does not exceed the maximum transmit power of the device; and the first preset parameter is a preset power, and the second preset parameter is determined according to at least one of a number of transmitted sidelinks corresponding to carriers in the second carrier set, a weight value of each of the sidelinks, or a transmission priority value of each of the sidelinks.

The first preset parameter is a configured or preconfigured transmit power of the carrier in the second carrier set, e.g., it may be set that the carrier is to be transmitted according to a minimum power. Setting the transmit power of each carrier in the second carrier set in advance can prevent the total transmit power of the carriers in the second carrier set from being too large. The second preset parameter is a transmit power allocated to a carrier in the second carrier set. A current available transmit power of the device is allocated to the carriers in the second carrier set. The available transmit power is a transmit power allocated to the second carrier set. When the carrier set includes both the first carrier set and the second carrier set, a part of the maximum transmit power of the device is allocated to the carriers in the first carrier set, and the other part may be entirely or partially allocated to the carriers in the second carrier set. The part of power allocated to the carriers in the second carrier set is the available transmit power. If all the available transmit power is allocated to the carriers in the second carrier set, the available transmit power may be allocated to the carriers according to the number of transmitted sidelinks corresponding to the carriers in the second carrier set, transmission priority values of the sidelinks, etc. If the available transmit power is partially allocated to the carriers in the second carrier set, the minimum power of the carriers in the second carrier set may be determined according to the weight values, the transmission priority values, etc., and the carriers in the second carrier set may be transmitted according to the minimum power, such that the total transmit power of the carriers in the second carrier set does not exceed the available transmit power. When the carrier set includes only the second carrier set, the maximum transmit power of the device may be allocated to the carriers in the second carrier set. In this case, the available transmit power is the maximum transmit power of the device. The second preset parameter may be determined according to the number of transmitted sidelinks, may be determined according to the weight value, or may be determined according to the transmission priority value, e.g., based on the number of Resource Blocks (RBs) corresponding to the carrier, etc., which will be described in detail later.

The number of transmitted sidelinks may be limited. When the number of transmitted sidelinks is too large, the total transmit power of the carriers may exceed the maximum transmit power of the device. Therefore, in some embodiments, the number of transmitted sidelinks is determined by the device according to transmission priority values of the sidelinks and the maximum transmit power of the device. For example, referring to FIG. 2, the power determination method further includes the following steps.

In a step of S310, a power sum of transmit powers of a plurality of sidelinks is calculated according to an ascending order of transmission priority values of the sidelinks.

In a step of S320, a target power sum within a limit that does not exceed the maximum transmit power of the device is determined, and the number of transmitted sidelinks corresponding to the target power sum is determined.

The transmission priority value of each sidelink is determined. The priority value corresponds to the priority of the sidelink. A higher priority of the sidelink indicates a lower priority value. A lower priority of the sidelink indicates a higher priority value. Based on this, the priority values of the sidelinks are sorted in ascending order, and the transmit powers of the sidelinks are added up in ascending order, with the sum of the transmit powers not exceeding the maximum transmit power of the device. Then, the number of sidelinks can be determined according to the determined sum of transmit powers, which is a limit of the number of transmitted sidelinks.

In some embodiments, determining, according to a number of sidelinks transmitted by a device, a transmit power of the sidelinks in S200 includes: determining transmit powers of the plurality of carriers according to a third preset parameter, or allocating the maximum transmit power of the device to the plurality of carriers according to a fourth preset parameter,

where the third preset parameter is a preset power, and the fourth preset parameter is determined according to at least one of a number of transmitted sidelinks corresponding to the plurality of carriers, a weight value of each of the sidelinks, or a transmission priority value of each of the sidelinks.

When the total transmit power of the carriers exceeds the maximum transmit power of the device, the transmit power is allocated to the carriers in the carrier set according to the maximum power of the device. The third preset parameter is a configured or preconfigured transmit power of the carrier in the carrier set. Setting the transmit power of each carrier in the carrier set in advance can prevent the total transmit power of the carriers in the carrier set from being too large. The fourth preset parameter is a transmit power allocated to a carrier in the carrier set. The maximum transmit power of the device is allocated to the carriers in the carrier set. The fourth preset parameter may be determined according to the number of transmitted sidelinks, may be determined according to the weight value, or may be determined according to the transmission priority value, e.g., based on the number of RBs corresponding to the carrier, etc., which will be described in detail later.

The weight value in the above embodiments may be determined by at least one of:

a ratio of a total number of RBs of PSSCHs corresponding to all carriers in the carrier set to a number of RBs of a PSSCH corresponding to the carrier;

a ratio of a number of RBs of a resource pool corresponding to the carrier to a number of RBs of a PSSCH corresponding to the carrier; or

a ratio of a total number of RBs of a resource pool corresponding to all carriers in the carrier set to a number of RBs of a resource pool corresponding to the carrier.

In a first method, the weight value of the carrier is determined according to the ratio of the number of RBs of the PSSCH of the carrier to the total number of RBs of the PSSCHs of all the carriers in the carrier set. In a second method, the weight value of the carrier is determined according to the ratio of the number of RBs of the resource pool corresponding to the carrier to the number of RBs of the PSSCH of the carrier. In a third method, the weight value of the carrier is determined according to the ratio of the total number of RBs of the PSSCHs of all the carriers in the carrier set to the number of RBs of the resource pool corresponding to the carrier.

Referring to FIG. 3, in some embodiments, the power determination method further includes the following steps.

In a step of S410, a maximum transmit power of a device is determined.

In a step of S420, at least one of the sidelinks is discarded according to priority values of the sidelinks when the total transmit power of the plurality of carriers exceeds the maximum transmit power of the device.

The priority value of the sidelink is inversely proportional to the priority of the sidelink. If the total transmit power of the carriers in the carrier set exceeds the maximum transmit power of the device, sidelinks of a low priority may be discarded (i.e., sidelinks with large priority values may be discarded) to reduce the number of sidelinks, thereby reducing the number of carriers borne by the device and reducing the total transmit power of the carriers.

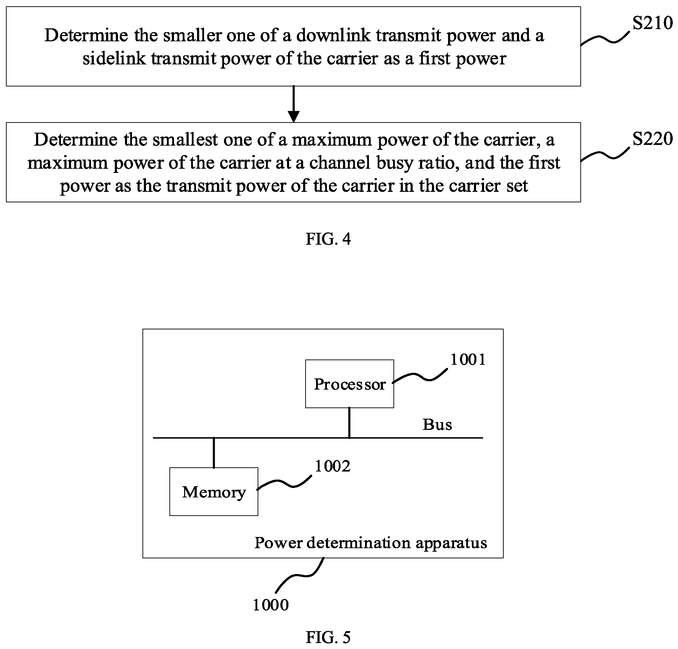

Referring to FIG. 4, a transmit power of a carrier in the carrier set is determined by the following steps.

In a step of S210, the smaller one of a downlink transmit power and a sidelink transmit power of the carrier is determined as a first power.

In a step of S220, the smallest one of a maximum power of the carrier, a maximum power of the carrier at a channel busy ratio, and the first power is determined as the transmit power of the carrier in the carrier set.

Assuming that the carrier index is represented by c or f,

$$P_{PSSCH,c}(i) = min(P_{CMAX,c} \, , \, P_{MAX,CBR,c} \, , min(P_{PSSCH,D,c}(i), P_{PSSCH,SL,c}(i))),$$

where $P_{PSSCH,c}(i)$ represents a power of a carrier transmitting a PSSCH when the carrier does not transmit a PSCCH on a transmission occasion i, i.e., the transmit power of the carrier; $P_{CMAX,c}$ represents the maximum power of the carrier; $P_{MAX,CBR,c}$ represents the maximum power of the carrier at the channel busy ratio (CBR), where if $P_{MAX,CBR,c}$ is not provided or configured, $P_{MAX,CBR,c} = P_{CMAX,c}$; $P_{PSSCH,D,c}(i)$ represents a transmit power based on the downlink pathloss; and $P_{PSSCH,SL,c}(i)$ represents a transmit power based on the sidelink pathloss.

In other words, a smaller value is determined from $P_{PSSCH,D,c}(i)$ and $P_{PSSCH,SL,c}(i)$, and is then compared with

$P_{CMAX,c}$ and $P_{MAX,CBR,c}(i)$ to determine a smallest value as the transmit power of the carrier.

A first downlink transmit power of a carrier in the first carrier set is determined according to a first power parameter, a downlink path loss, and a number of RBs of a PSSCH corresponding to the carrier. A first sidelink transmit power of a carrier in the first carrier set is determined according to a second power parameter, a sidelink path loss, and a number of RBs of a PSSCH corresponding to the carrier.

For the first downlink transmit power $P_{PSSCH,D,c}(i)$, when dl-P0-PSSCH-PSCCH is provided or configured (i.e., the current carrier is a carrier in the first carrier set),

$$P_{PSSCH,D,c}(i) = P_{O,D,c} + 10log_{10}(2^{\mu} \cdot M_{RB,c}^{PSSCH}(i)) + \alpha_{D,c} \cdot PL_{D,c}.$$

For the first sidelink transmit power $P_{PSSCH,SL,c}(i)$, when sl-P0-PSSCH-PSCCH is provided or configured (i.e., the current carrier is a carrier in the first carrier set),

$$P_{PSSCH,SL,c}(i) = P_{O,SL,c} + 10log_{10}(2^{\mu} \cdot M_{RB,c}^{PSSCH}(i)) + \alpha_{SL,c} \cdot PL_{SL,c}.$$

In the above formulas, $P_{O,D,c}$ represents the P0 value corresponding to power control of the carrier based on the downlink pathloss, i.e., dl-P0-PSSCH-PSCCH, $\alpha_{D,c}$ represents a compensation factor corresponding to the carrier based on the downlink pathloss, and $PL_{D,c}$ represents that the path loss in the carrier is based on the downlink pathloss; and $P_{O,SL,c}$ represents the P0 value corresponding to power control of the carrier based on the sidelink pathloss, i.e., sl-P0-PSSCH-PSCCH, $\alpha_{SL,c}$ represents a compensation factor corresponding to the carrier based on the sidelink passloss, $PL_{SL,c}$ represents that the path loss in the carrier is based on the sidelink passloss, $\mu$ represents a subcarrier spacing spreading factor, and $M_{RB,c}^{PSSCH}$ represents the number of RBs corresponding to the PSSCH in the carrier.

A second downlink transmit power of a carrier in the second carrier set is the smaller one of a maximum power of the carrier and a maximum power of the carrier at a channel busy ratio. A second sidelink transmit power of a carrier in the second carrier set is the smaller one of the maximum power of the carrier and the second downlink transmit power.

For the second downlink transmit power $P_{PSSCH,D,c}(i)$, when sl-P0-PSSCH-PSCCH is not provided or configured (i.e., the current carrier is a carrier in the second carrier set),

$$P_{PSSCH,D,c}(i) = (P_{CMAX,c}, P_{MAX,CBR,c}).$$

For the second sidelink transmit power $P_{PSSCH,SL,c}(i)$, when sl-P0-PSSCH-PSCCH is not provided or configured (i.e., the current carrier is a carrier in the second carrier set),

$$P_{PSSCH,SL,c}(i) = (P_{CMAX,c}, P_{PSSCH,D,c}(i)).$$

In some embodiments, when the device performs transmission simultaneously through a PSSCH and a PSCCH, the transmit power of the carrier in the carrier set includes a PSSCH transmit power and a PSCCH transmit power, and the PSSCH transmit power and the PSCCH transmit power are determined according to a number of RBs of the PSSCH corresponding to the carrier and a number of RBs of the PSCCH corresponding to the carrier.

With reference to the above formula $P_{PSSCH,c}(i) = min(P_{CMAX,c}, P_{MAX,CBR,c}, min(P_{PSSCH,D,c}(i), P_{PSSCH,SL,c}(i)))$, when a PSSCH and a PSCCH are transmitted on the transmission occasion i, the power of the PSSCH and the power of the PSCCH transmitted by the device on the transmission occasion i are respectively:

$$P_{PSSCH2,c}(i) = 10log_{10}(\frac{M_{RB,c}^{PSSCH}(i) - M_{RB,c}^{PSCCH}(i)}{M_{RB,c}^{PSSCH}(i)}) + P_{PSSCH,c}(i)$$

$$P_{PSCCH,c}(i) = 10log_{10}(\frac{M_{RB,c}^{PSCCH}(i)}{M_{RB,c}^{PSSCH}(i)}) + P_{PSSCH,c}(i)$$

where $P_{PSSCH2,c}(i)$ represents a power of a carrier transmitting a PSSCH when the carrier transmits a PSCCH on the transmission occasion i;

$P_{PSCCH,c}(i)$ represents the power of the carrier transmitting the PSCCH on the transmission occasion i; and

$M_{RB,c}^{PSCCH}(i)$ represents the number of RBs corresponding to the PSCCH in the carrier.

In some embodiments, when the device transmits a sidelink-synchronization signaling block (S-SSB) through a physical sidelink broadcast channel (PSBCH), the transmit power of the carrier in the carrier set is a PSBCH transmit power, and the PSBCH transmit power is determined according to a maximum power of the carrier, a power value for power control of the carrier based on a downlink path loss, a number of RBs corresponding to the PSBCH, and a path loss of a sidelink corresponding to the carrier.

When the S-SSB is transmitted on the transmission occasion i, assuming that the carrier index is represented by c or f,

$$P_{S-SSB,c}(i) = min(P_{CMAX,c}, P_{O,S-SSB,c}(i) + 10log_{10}(2^{\mu} \cdot M_{RB,c}^{S-SSB}(i) + \alpha_{S-SSB,c} \cdot PL_c)$$

where $P_{S\text{-}SSB,c}(i)$ represents a power of the carrier transmitting the S-SSB on the transmission occasion i;

$M_{RB,c}^{S-SSB}(i)$ represents the number of RBs corresponding to the S-SSB in the carrier;

$P_{O,S\text{-}SSB,c}(i)$ represents the PO value corresponding to power control of the carrier based on the downlink pathloss;

$\alpha_{S\text{-}SSB,c}$ represents the compensation factor corresponding to the carrier based on the downlink pathloss; and

$PL_c$ represents that the path loss in the carrier is based on the downlink pathloss.

It can be understood that when the S-SSB is transmitted on the transmission occasion i, a transmit power of a synchronization reference carrier is preferentially satisfied during power allocation or power reduction.

To sum up, it can be seen that during carrier aggregation in a V2X scenario, the transmit power of the carrier or the transmit power of the sidelink carrying the carrier is determined according to the maximum transmit power of the device, the number of transmitted carriers, path loss, etc., thereby implementing the determination, reduction or adjustment of the transmit power of the carrier in the carrier aggregation scenario. This not only avoids transmit power limitation, but also avoids a too low transmit power.

The power determination method of the present disclosure will be described in detail below through several examples.

The magnitude of the carrier power is expressed as follows.

Assuming that the carrier index is represented by c or f, on the transmission occasion i,

$$P_{PSSCH,c}(i) = min(P_{CMAX,c}, P_{MAX,CBR,c}, min(P_{PSSCH,D,c}(i), P_{PSSCH,SL,c}(i))).$$

If dl-P0-PSSCH-PSCCH is provided or configured, the power based on the downlink pathloss is:

$$P_{PSSCH,D,c}(i) = P_{O,D,c} + 10log_{10}(2^{\mu} \cdot M_{RB,c}^{PSSCH}(i)) + \alpha_{D,c} \cdot PL_{D,c}.$$

If dl-P0-PSSCH-PSCCH is not provided or configured, the power based on the downlink pathloss is:

$$P_{PSSCH,D,c}(i) = (P_{CMAX,c}, P_{MAX,CBR,c}).$$

If sl-P0-PSSCH-PSCCH is provided or configured, the power based on the sidelink pathloss is:

$$P_{PSSCH,SL,c}(i) = P_{O,SL,c} + 10log_{10}(2^{\mu} \cdot M_{RB,c}^{PSSCH}(i)) + \alpha_{SL,c} \cdot PL_{SL,c}.$$

If sl-P0-PSSCH-PSCCH is not provided or configured, the power based on the sidelink pathloss is:

$$P_{PSSCH,SL,c}(i) = (P_{CMAX,c}, P_{PSSCH,D,c}(i)).$$

In the above formulas, $P_{PSSCH,c}(i)$ represents a power of a carrier transmitting a PSSCH when the carrier does not transmit a PSCCH on the transmission occasion i, i.e., the transmit power of the carrier;

$P_{CMAX,c}$ represents the maximum power of the carrier, and $P_{CMAX,c}(i)$ represents the maximum power of the carrier on the transmission occasion i, where if the maximum power of the carrier does not change with different occasions, i can be omitted;

$P_{MAX,CBR,c}$ represents the maximum power of the carrier at the CBR, and $P_{MAX,CBR,c}(i)$ represents the maximum power of the carrier on the transmission occasion i at the CBR, where if the maximum power of the carrier at the CBR does not change with different occasions, i can be omitted, and if $P_{MAX,CBR,c}$ is not provided or configured, $P_{MAX,CBR,c} = P_{CMAX,c}$;

$\mu$ represents the subcarrier spacing spreading factor, and $M_{RB,c}^{PSSCH}$ represents the number of RBs corresponding to the PSSCH in the carrier;

$P_{O,D,c}$ represents the P0 value corresponding to power control of the carrier based on the downlink pathloss, i.e., dl-P0-PSSCH-PSCCH, $\alpha_{D,c}$ represents a compensation factor corresponding to the carrier based on the downlink passloss, and $PL_{D,c}$ represents that the path loss in the carrier is based on the downlink pathloss; and

$P_{O,SL,c}$ represents the P0 value corresponding to power control of the carrier based on the sidelink pathloss, i.e., sl-P0-PSSCH-PSCCH, $\alpha_{SL,c}$ represents a compensation factor corresponding to the carrier based on the sidelink pathloss, and $PL_{SL,c}$ represents that the path loss in the carrier is based on the sidelink passloss.

Taking PSSCH power as an example, the carrier index c or f may be omitted. The omission of the carrier index indicates that different carriers have the same type parameter value, or indicates that the carrier and a user terminal device have the same type parameter value. When the carrier index is omitted, the PSSCH power is expressed as:

$$P_{PSSCH}(i) = min(P_{CMAX}, P_{MAX,CBR}, min(P_{PSSCH,D}(i), P_{PSSCH,SL}(i))).$$

The same applies to other formulas, i.e., the carrier index c or f can also be omitted in the other formulas, which will not be described in detail herein again.

In the following embodiments, unless otherwise stated, the carrier index c or f is omitted, and the power is measured in dBm, which will not be described in detail herein.

Embodiment One

When all carriers in the carrier set have dl-P0-PSSCH-PSCCH and/or sl-P0-PSSCH-PSCCH, the PSSCH power is: $P_{PSSCH}(i) = min(P_{CMAX}, P_{MAX,CBR}, min(P_{PSSCH,D}(i), P_{PSSCH,SL}(i)))$.

A set of carriers having dl-P0-PSSCH-PSCCH and/or sl-P0-PSSCH-PSCCH is referred to as the first carrier set. The transmit power of the carrier in the first carrier set is expressed by the following formulas:

$$P_{PSSCH,D}(i) = P_{O,D} + 10log_{10}(2^{\mu} \cdot M_{RB}^{PSSCH}(i)) + \alpha_D \cdot PL_D$$

$$P_{PSSCH,SL}(i) = P_{O,SL} + 10log_{10}(2^{\mu} \cdot M_{RB}^{PSSCH}(i)) + \alpha_{SL} \cdot PL_{SL}.$$

If a total transmit power of a plurality of carriers of a UE exceeds a maximum transmit power $P_{CMAX}$ of the UE, the UE determines $N_{Tx,PSSCH}$ such that $N_{Tx,PSSCH} \geq max(1, \sum_{j=1}^{K} M_j)$ is satisfied, where $M_j$ is the number of PSSCHs having a priority value of j, j starting from 1 indicates that the priority values are sorted in ascending order, K is defined as a maximum value K that satisfies $\sum_{j=1}^{K} \sum_{m=1}^{M_j} \widehat{P_{PSSCH}}(i) \leq \widehat{P_{CMAX}}$, and the UE transmits the PSSCH according to the determined $N_{TX,PSSCH}$ and the corresponding $P_{PSSCH}(i)$.

The $\widehat{P_{PSSCH}}(i)$ represents a linear value of $P_{PSSCH}(i)$, i.e., $10log_{10} \widehat{P_{PSSCH}}(i) = P_{PSSCH}(i)$.

The $\widehat{P_{CMAX}}$ represents a linear value of $P_{CMAX}$, i.e., $10log_{10} \widehat{P_{CMAX}} = P_{CMAX}$.

A larger priority value of a sidelink transmission indicates a lower priority of the sidelink transmission.

Embodiment Two

When none of the carriers in the carrier set has dl-P0-PSSCH-PSCCH and 0-PSSCH-PSCCH, the PSSCH power is: $P_{PSSCH}(i) = min(P_{CMAX}, P_{MAX,CBR}, min(P_{PSSCH,D}(i), P_{PSSCH,SL}(i)))$.

A set of carriers not having dl-P0-PSSCH-PSCCH and sl-P0-PSSCH-PSCCH is referred to as a second carrier set. The transmit power of the carrier in the second carrier set is expressed by the following formulas:

$$P_{PSSCH,D}(i) = (P_{CMAX}, P_{MAX,CBR})$$

$$P_{PSSCH,SL}(i) = (P_{CMAX}, P_{PSSCH,D}(i)).$$

In other words, the PSSCH power is equivalent to $P_{PSSCH}(i) = min(P_{CMAX}, P_{MAX,CBR})$.

The above formulas show that each carrier uses a large or maximum power, which will cause the total transmit power of a plurality of carriers to exceed the maximum power $P_{CMAX}$ of the UE. In this case, it is necessary to perform power reduction to determine the PSSCH power. To avoid excessive power reduction, the maximum power may be allocated to the carriers in the second carrier set by means of equal allocation or proportional weighting or based on priority values, with each carrier having the minimum power, or the minimum power may be determined by configuration or preconfiguration.

The power determination may be performed in one of the following manners.

(1) Determine the PSSCH transmit power according to a formula $P_{PSSCH}(i) = P_X - 10log_{10} N_{Tx,PSSCH}$, where $P_X = min(P_{CMAX}, P_{MAX,CBR})$ or $P_X = P_{CMAX}$ or $P_X = P_{MAX,CBR}$.

(2) Determine the PSSCH transmit power according to a formula $P_{PSSCH}(i) = P_X - 10log_{10}(M_{RB,total}^{PSSCH}(i)/M_{RB,c}^{PSSCH}(i))$,

where $M_{RB,total}^{PSSCH}$ represents the total number of RBs of PSSCHs in all the carriers.

(3) Determine the PSSCH transmit power according to a formula $P_{PSSCH}(i) = P_X - 10log_{10}(M_{RB,c}^{RP}(i)/M_{RB,c}^{PSSCH}(i))$,

where $M_{RB,c}^{RP}$ represents the number of RBs corresponding to the resource pool in the carrier.

(4) Determine the PSSCH transmit power according to a formula $P_{PSSCH}(i) = P_X - 10log_{10}(M_{RB,total}^{RP}(i)/M_{RB,c}^{RP}(i))$,

where $M_{RB,total}^{RP}$ represents the total number of RBs of resource pools in all the carriers.

(5) Determine $P_{PSSCH}(i)$ by configuration or preconfiguration.

(6) Determine $N_{Tx,PSSCH}$ such that $N_{Tx,PSSCH} \geq max(1, \sum_{j=1}^{K} M_j)$ is satisfied, where $M_j$ is the number of PSSCHs having a priority value of j, j starting from 1 indicates that the priority values are sorted in ascending order, K is defined as a maximum value K that satisfies $\sum_{j=1}^{K} \sum_{m=1}^{M_j} \widehat{P_{PSSCH}}(i) \leq \widehat{P_{CMAX}}$, and the UE transmits the PSSCH according to the determined $N_{Tx,PSSCH}$ and the corresponding $P_{PSSCH}(i)$.

Embodiment Three

When some of the carriers in the carrier set do not have dl-P0-PSSCH-PSCCH and sl-P0-PSSCH-PSCCH, the PSSCH power is: $P_{PSSCH}(i) = min(P_{CMAX}, P_{MAX,CBR}, min(P_{PSSCH,D}(i), P_{PSSCH,SL}(i)))$.

A set of carriers having dl-P0-PSSCH-PSCCH and/or sl-P0-PSSCH-PSCCH is referred to as the first carrier set. The transmit power of the carrier in the first carrier set is expressed by the following formulas:

$$P_{PSSCH,D}(i) = P_{0,D} + 10log_{10}(2^{\mu} \cdot M_{RB}^{PSSCH}(i)) + \alpha_D \cdot PL_D$$

$$P_{PSSCH,SL}(i) = P_{0,SL} + 10log_{10}(2^{\mu} \cdot M_{RB}^{PSSCH}(i)) + \alpha_{SL} \cdot PL_{SL}.$$

A set of carriers not having dl-P0-PSSCH-PSCCH and sl-P0-PSSCH-PSCCH is referred to as a second carrier set. The transmit power of the carrier in the second carrier set is expressed by the following formulas:

$$P_{PSSCH,D}(i) = (P_{CMAX}, P_{MAX,CBR})$$

$$P_{PSSCH,SL}(i) = (P_{CMAX}, P_{PSSCH,D}(i)).$$

If a total transmit power of a plurality of carriers in the first carrier set and the second carrier set exceeds a maximum transmit power $P_{CMAX}$ of the UE, the UE determines $N_{Tx,PSSCH}$ such that $N_{Tx,PSSCH} \geq max(1, \sum_{j=1}^{K} M_j)$ is satisfied, where $M_j$ is the number of PSSCHs having a priority value of j, j starting from 1 indicates that the priority values are sorted in ascending order, K is defined as a maximum value K that satisfies $\sum_{j=1}^{K} \sum_{m=1}^{M_j} \widetilde{P_{PSSCH}}(i) \leq \widetilde{P_{CMAX}}$, and the UE transmits the PSSCH according to the determined $N_{Tx,PSSCH}$ and the corresponding $P_{PSSCH}(i)$.

Alternatively,

If a total transmit power of a plurality of carriers in the first carrier set and the second carrier set exceeds a maximum transmit power $P_{CMAX}$ of the UE,

the UE determines $N_{Tx,PSSCH}$ such that $N_{Tx,PSSCH} \geq max(1, \sum_{j=1}^{K} M_j)$ is satisfied, where $M_j$ is the number of PSSCHs having a priority value of j, j starting from 1 indicates that the priority values are sorted in ascending order, K is defined as a maximum value K that satisfies $\sum_{j=1}^{K} \sum_{m=1}^{M_j} \widetilde{P_{PSSCH}}(i) \leq \widetilde{P_{CMAX}}$, and the UE transmits a PSSCH according to the determined $N_{Tx,PSSCH}$ and corresponding $P_{PSSCH,set1}(i)$ in the first carrier set and transmits a PSSCH according to the determined $N_{Tx,PSSCH}$ and corresponding $P_{PSSCH,set2}(i)$ in the second carrier set. A relationship between linear values of the powers satisfies:

$$\sum \widetilde{P_{PSSCH,set2}}(i) \leq \widetilde{P_{CMAX}} - \sum \widetilde{P_{PSSCH,set1}}(i).$$

In an embodiment, the power of the carriers in the first carrier set is allocated according to the P0 value corresponding to power control, and then the remaining power $\widetilde{P_{CMAX}} - \sum \widetilde{P_{PSSCH,set1}}(i)$ may be allocated to the carriers in the second carrier set by means of equal allocation or proportional weighting or based on priority values.

In the above formula, $P_{PSSCH,set1}(i)$ represents a power of a carrier in the first carrier set transmitting a PSSCH when the carrier does not transmit a PSCCH on the transmission occasion i, $P_{PSSCH,set2}(i)$ represents a power of a carrier in the second carrier set transmitting a PSSCH when the carrier does not transmit a PSCCH on the transmission occasion i, $\widetilde{P_{PSSCH,set1}}(i)$ represents a linear value of $P_{PSSCH,set1}(i)$, i.e., $10log_{10}\widetilde{P_{PSSCH,set1}}(i) = P_{PSSCH,set1}(i)$, and $\widetilde{P_{PSSCH,set2}}(i)$ represents a linear value of $P_{PSSCH,set2}(i)$, i.e., $10log_{10}\widetilde{P_{PSSCH,set2}}(i) = P_{PSSCH,set2}(i)$.

Embodiment Four

Regardless of whether the carriers have dl-P0-PSSCH-PSCCH and sl-P0-PSSCH-PSCCH, the transmit powers of the carriers are determined in one of the following manners.

If a total transmit power of a plurality of carriers in the carrier set exceeds the maximum power, the maximum power is allocated to the carriers in the carrier set by means of equal allocation or proportional weighting or based on priority values.

Alternatively,
if a total transmit power of a plurality of carriers in the carrier set exceeds the maximum power, the powers of the carriers in the carrier set are determined by configuration or preconfiguration.

Alternatively,
if a total transmit power of a plurality of carriers in the carrier set exceeds the maximum power, sidelink transmissions with large priority values are discarded.

Embodiment Five

A PSCCH is transmitted on the transmission occasion i.

Assuming that the carrier index is represented by c or f,

$$P_{PSSCH,c}(i) = min(P_{CMAX,c} , P_{MAX,CBR,c} , min(P_{PSSCH,D,c}(i), P_{PSSCH,SL,c}(i))).$$

The power of the PSSCH and the power of the PSCCH transmitted by the device on the transmission occasion i are respectively:

$$P_{PSSCH2,c}(i) = 10log_{10}(\frac{M_{RB,c}^{PSSCH}(i) - M_{RB,c}^{PSCCH}(i)}{M_{RB,c}^{PSSCH}(i)}) + P_{PSSCH,c}(i)$$

$$P_{PSCCH,c}(i) = 10log_{10}(\frac{M_{RB,c}^{PSCCH}(i)}{M_{RB,c}^{PSSCH}(i)}) + P_{PSSCH,c}(i)$$

where $P_{PSSCH2,c}(i)$ represents a power of a carrier transmitting a PSSCH when the carrier transmits a PSCCH on the transmission occasion i;

$P_{PSCCH,c}(i)$ represents the power of the carrier transmitting the PSCCH on the transmission occasion i; and

$M_{RB,c}^{PSCCH}(i)$ represents the number of RBs corresponding to the PSCCH in the carrier.

Embodiment Six

An S-SSB is transmitted on the transmission occasion i.

Assuming that the carrier index is represented by c or f,

$$P_{S-SSB,c}(i) = min(P_{CMAX,c} , P_{O,S-SSB,c}(i) + 10log_{10}(2^{\mu} \cdot M_{RB,c}^{S-SSB}(i) + \alpha_{S-SSB,c} \cdot PL_c)$$

where $P_{S-SSB,c}(i)$ represents a power of the carrier transmitting the S-SSB on the transmission occasion i;

$M_{RB,c}^{S-SSB}(i)$ represents the number of RBs corresponding to the S-SSB in the carrier;

$P_{O,S-SSB,c}(i)$ represents the PO value corresponding to power control of the carrier based on the downlink pathloss;

$\alpha_{S-SSB,c}$ represents the compensation factor corresponding to the carrier based on the downlink pathloss; and

$PL_c$ represents that the path loss in the carrier is based on the downlink pathloss.

It can be understood that when the S-SSB is transmitted on the transmission occasion i, a transmit power of a synchronization reference carrier is preferentially satisfied during power allocation or power reduction.

Embodiment Seven

When some of the carriers in the carrier set do not have dl-P0-PSSCH-PSCCH and sl-P0-PSSCH-PSCCH, the PSSCH power is: $P_{PSSCH}(i) = min(P_{CMAX} , P_{MAX,CBR} min(P_{PSSCH,D}(i), P_{PSSCH,SL}(i)))$.

A set of carriers having dl-P0-PSSCH-PSCCH and/or sl-P0-PSSCH-PSCCH is referred to as the first carrier set. The transmit power of the carrier in the first carrier set is expressed by the following formulas:

$$P_{PSSCH,D}(i) = P_{O,D} + 10log_{10}(2^{\mu} \cdot M_{RB}^{PSSCH}(i)) + \alpha_D \cdot PL_D$$

$$P_{PSSCH,SL}(i) = P_{O,SL} + 10log_{10}(2^{\mu} \cdot M_{RB}^{PSSCH}(i)) + \alpha_{SL} \cdot PL_{SL}.$$

A set of carriers not having dl-P0-PSSCH-PSCCH and sl-P0-PSSCH-PSCCH is referred to as a second carrier set. The transmit power of the carrier in the second carrier set is expressed by the following formulas:

$$P_{PSSCH,D}(i) = (P_{CMAX}, P_{MAX,CBR})$$

$$P_{PSSCH,SL}(i) = (P_{CMAX}, P_{PSSCH,D}(i)).$$

If a total transmit power of a plurality of carriers in the first carrier set and the second carrier set exceeds the maximum power $P_{CMAX}$ of the UE, the UE transmits a PSSCH according to $P_{PSSCH,set1}(i)$ in the first carrier set and transmits a PSSCH according to $P_{PSSCH,set2}(i)$ in the second carrier set. A relationship between linear values of the powers satisfies:

$$\sum \widehat{P_{PSSCH,set2}}(i) \leq \widehat{P_{CMAX}} - \sum \widehat{P_{PSSCH,set1}}(i).$$

In an embodiment, the power of the carriers in the first carrier set is allocated according to the P0 value corresponding to power control, and then the remaining power $\widehat{P_{CMAX}} - \sum \widehat{P_{PSSCH,set1}}(i)$ may be allocated to the carriers in the second carrier set by means of equal allocation or proportional weighting or based on priority values.

In the above formula, $P_{PSSCH,set1}(i)$ represents a power of a carrier in the first carrier set transmitting a PSSCH when the carrier does not transmit a PSCCH on the transmission occasion i, $P_{PSSCH,set2}(i)$ represents a power of a carrier in the second carrier set transmitting a PSSCH when the carrier does not transmit a PSCCH on the transmission occasion i, $\widehat{P_{PSSCH,set1}}(i)$ represents a linear value of $P_{PSSCH,set1}(i)$, i.e., $10log_{10}\widehat{P_{PSSCH,set1}}(i) = P_{PSSCH,set1}(i)$, and $\widehat{P_{PSSCH,set2}}(i)$ represents a linear value of $P_{PSSCH,set2}(i)$, i.e., $10log_{10}\widehat{P_{PSSCH,set2}}(i) = P_{PSSCH,set2}(i)$.

It should be noted that the transmit power of the carrier determined based on $P_{PSSCH}(i)$ in Embodiments One, Two, Three, and Four and the transmit power of the carrier in the first carrier set and the second carrier set determined based on $P_{PSSCH,set1}(i)$ and $P_{PSSCH,set2}(i)$ in Embodiments Three and Seven refer to the power when the carrier transmit the PSSCH but does not transmit the PSCCH. In Embodiments One, Two, Three, and Four, when the carrier transmits the PSCCH on the transmission occasion i, $P_{PSSCH}(i)$ may be replaced by $P_{PSSCH2,c}(i)$ in Embodiment Five (where the subscript can be omitted). Similarly, for the division of the carriers into the first carrier set and the second carrier set, in Embodiment Five, the transmit powers of the carriers in the first carrier set and the second carrier set are respectively $P_{PSSCH2,C,set1}(i)$ and $P_{PSSCH2,c,set2}(i)$ when the carrier transmits the PSCCH on the transmission occasion i; and in Embodiments Three and Seven, when the carrier transmits the PSCCH on the transmission occasion i, $P_{PSSCH,set1}(i)$ and $P_{PSSCH,set2}(i)$ may be replaced by $P_{PSSCH2,C,set1}(i)$ and $P_{PSSCH2,c,set2}(i)$ (where the subscript c can be omitted).

The above two alternative cases are applicable to Embodiments One, Two, Three, and Four, and Embodiments Three and Seven. For formulas corresponding to a case where the carrier transmits a PSCCH on the transmission occasion i, reference may be made to Embodiment Five, and the details will not be described herein again.

An embodiment of the present disclosure provides a power determination system, including a power determination apparatus configured for determining, according to a number of sidelinks transmitted by a device, a transmit power of the sidelinks when a total transmit power of a plurality of carriers exceeds a maximum transmit power of the device.

An embodiment of the present disclosure provides a power determination apparatus, including at least one processor and a memory communicatively connected to the at least one processor, where the memory stores instructions executable by the at least one processor which, when executed by the at least one processor, cause the at least one processor to implement the power determination method.

Referring to FIG. 5, for example, a control processor 1001 and a memory 1002 in a transmission apparatus 1000 may be connected via a bus. The memory 1002, as a non-transitory computer-readable storage medium, may be configured for storing a non-transitory software program and a non-transitory computer-executable program. In addition, the memory 1002 may include a high-speed random access memory, and may also include a non-transitory memory, e.g., at least one magnetic disk storage device, flash memory device, or other non-transitory solid-state storage device. In some implementations, the memory 1002 may include memories located remotely from the control processor 1001, and the remote memories may be connected to the power determination apparatus 1000 via a network. Examples of the network include, but not limited to, the Internet, an intranet, a local area network, a mobile communication network, and combinations thereof.

Those having ordinary skills in the art may understand that the apparatus structure shown in FIG. 5 does not constitute a limitation to the transmission apparatus 1000, which may include more or fewer components than those shown in the figure, or some components may be combined, or a different component arrangement may be used.

An embodiment of the present disclosure provides a computer-readable storage medium, having computer-executable instructions stored therein. The computer-executable instructions, when executed by one or more control processors, for example, by a control processor 1001 in FIG. 5, may cause the one or more control processors to implement the power determination method in the above method embodiments, for example, implement the method steps S100 to S200 in FIG. 1, the method steps S310 to S320 in FIG. 2, the method steps S410 to S420 in FIG. 3, or the method steps S210 to S220 in FIG. 4.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

Those having ordinary skills in the art can understand that all or some of the steps in the methods disclosed above and the system can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

Although some implementations of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A power determination method, comprising:
   determining, according to a number of sidelinks transmitted by a device, a transmit power of the sidelinks, in response to a total transmit power of a plurality of carriers exceeding a maximum transmit power of the device.

2. The power determination method of claim 1, wherein the plurality of carriers constitute a carrier set, the carrier set comprises a first carrier set and a second carrier set, at least one of the first carrier set or the second carrier set is a non-empty set, carriers in the first carrier set have a power control parameter, and carriers in the second carrier set have an absence of the power control parameter.

3. The power determination method of claim 2, wherein the power control parameter comprises a first power parameter and/or a second power parameter, the first power parameter is used for representing a power value for power control based on a downlink path loss, and the second power parameter is used for representing a power value for power control based on a sidelink path loss.

4. The power determination method of claim 2, wherein a transmit power of a sidelink corresponding to a carrier in the first carrier set is determined according to at least a path loss.

5. The power determination method of claim 2, further comprising:

   determining a transmit power of a carrier in the second carrier set according to a first preset parameter;
   or
   determining an available transmit power of the device and allocating the available transmit power to a carrier in the second carrier set according to a second preset parameter,

wherein the available transmit power does not exceed the maximum transmit power of the device; and the first preset parameter is a preset power, and the second preset parameter is determined according to at least one of a number of transmitted sidelinks corresponding to carriers in the second carrier set, a weight value, or a transmission priority value.

6. The power determination method of claim 1, wherein the number of transmitted sidelinks is determined by the device according to transmission priority values of the sidelinks and the maximum transmit power of the device.

7. The power determination method of claim 6, further comprising:

calculating a power sum of transmit powers of a plurality of sidelinks according to an ascending order of transmission priority values of the sidelinks; and
determining a target power sum within a limit that does not exceed the maximum transmit power of the device, and determining the number of transmitted sidelinks corresponding to the target power sum.

8. The power determination method of claim 1, wherein determining, according to a number of sidelinks transmitted by a device, a transmit power of the sidelinks comprises:

determining transmit powers of the plurality of carriers according to a third preset parameter, or allocating the maximum transmit power of the device to the plurality of carriers according to a fourth preset parameter, wherein the third preset parameter is a preset power, and the fourth preset parameter is determined according to at least one of a number of transmitted sidelinks corresponding to the plurality of carriers, a weight value, or a transmission priority value.

9. The power determination method of claim 5 or 8, wherein the weight value represents at least one of:

a ratio of a total number of resource blocks, RBs, of physical sidelink shared channels, PSSCHs, corresponding to the plurality of carriers to a number of RBs of a PSSCH corresponding to the carrier;
a ratio of a number of RBs of a resource pool corresponding to the carrier to a number of RBs of a PSSCH corresponding to the carrier; or
a ratio of a total number of RBs of a resource pool corresponding to the plurality of carriers to a number of RBs of a resource pool corresponding to the carrier.

10. The power determination method of claim 1, further comprising:
discarding at least one of the sidelinks according to priority values of the sidelinks, in response to the total transmit power of the plurality of carriers exceeding the maximum transmit power of the device.

11. The power determination method of claim 2, wherein a transmit power of a carrier in the carrier set is determined by:

determining a smaller one of a downlink transmit power and a sidelink transmit power of the carrier as a first power; and
determining the smallest one of a maximum power of the carrier, a maximum power of the carrier at a channel busy ratio, and the first power as the transmit power of the carrier in the carrier set.

12. The power determination method of claim 11, wherein a first downlink transmit power of a carrier in the first carrier set is determined according to a first power parameter, a downlink path loss, and a number of RBs of a PSSCH corresponding to the carrier, and a first sidelink transmit power of a carrier in the first carrier set is determined according to a second power parameter, a sidelink path loss, and a number of RBs of a PSSCH corresponding to the carrier.

13. The power determination method of claim 11 or 12, wherein a second downlink transmit power of a carrier in the second carrier set is a smaller one of a maximum power of the carrier and a maximum power of the carrier at a channel busy ratio, and a second sidelink transmit power of a carrier in the second carrier set is a smaller one of the maximum power of the carrier and the second downlink transmit power.

14. The power determination method of claim 1, wherein in response to the device performing transmission simultaneously through a PSSCH and a physical sidelink control channel, PSCCH, the transmit power of the carrier comprises a PSSCH transmit power and a PSCCH transmit power, and the PSSCH transmit power and the PSCCH transmit power are determined according to a number of RBs of the PSSCH corresponding to the carrier and a number of RBs of the PSCCH corresponding to the carrier.

15. The power determination method of claim 1, wherein in response to the device transmitting a sidelink-synchronization signaling block, S-SSB, through a physical sidelink broadcast channel, PSBCH, the transmit power of the carrier is a PSBCH transmit power, and the PSBCH transmit power is determined according to a maximum power of the carrier, a power value for power control of the carrier based on a downlink path loss, a number of RBs corresponding to the PSBCH, and a path loss of a sidelink corresponding to the carrier.

16. A power determination system, comprising a power determination apparatus configured for determining, according to a number of sidelinks transmitted by a device, a transmit power of the sidelinks, in response to a total transmit power of a plurality of carriers exceeding a maximum transmit power of the device.

17. A power determination apparatus, comprising at least one processor and a memory communicatively connected to the at least one processor, wherein the memory stores instructions executable by the at least one processor which, when executed by the at least one processor, cause the at least one processor to perform the power determination method of any one of claims 1 to 15.

18. A computer-readable storage medium, storing computer-executable instructions which, when executed by a computer, cause the computer to perform the power determination method of any one of claims 1 to 15.

Determine a maximum transmit power of a device

S100

Determine, according to a number of sidelinks transmitted by the device, a transmit power of the sidelinks when a total transmit power of a plurality of carriers exceeds the maximum transmit power of the device.

S200

FIG. 1

Calculate a power sum of transmit powers of a plurality of sidelinks according to an ascending order of transmission priority values of the sidelinks

S310

Determine a target power sum within a limit that does not exceed the maximum transmit power of the device, and determine the number of transmitted sidelinks corresponding to the target power sum

S320

FIG. 2

Determine a maximum transmit power of a device

S410

Discard at least one of the sidelinks according to priority values of the sidelinks when the total transmit power of the plurality of carriers exceeds the maximum transmit power of the device

S420

FIG. 3

Determine the smaller one of a downlink transmit power and a sidelink transmit power of the carrier as a first power

~ S210

Determine the smallest one of a maximum power of the carrier, a maximum power of the carrier at a channel busy ratio, and the first power as the transmit power of the carrier in the carrier set

~ S220

FIG. 4

Processor

1001

Bus

Memory

1002

Power determination apparatus

1000

FIG. 5

## INTERNATIONAL SEARCH REPORT

| | International application No. |
|---|---|
| | **PCT/CN2024/100959** |

### A. CLASSIFICATION OF SUBJECT MATTER

H04W72/044(2023.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, WPABSC: 边链, 侧链, 侧行链路, 传输功率, 发射功率, 个数, 功率, 参数, 消减, 数量, 数目, 个数, 优先级, 载波, 载波聚合, 最大, 阈值, CA, sidelink, V2X, D2D, transmission, priority, max, threshold, number, carrier, power, reduction, parameter

### C. DOCUMENTS CONSIDERED TO BE RELEVANT

| Category* | Citation of document, with indication, where appropriate, of the relevant passages | Relevant to claim No. |
|---|---|---|
| X | CN 107027178 A (ZTE CORP.) 08 August 2017 (2017-08-08) description, paragraphs 5-92 | 1, 10, 16-18 |
| Y | CN 107027178 A (ZTE CORP.) 08 August 2017 (2017-08-08) description, paragraphs 5-92 | 6-7 |
| Y | US 2023189218 A1 (SAMSUNG ELECTRONICS CO., LTD.) 15 June 2023 (2023-06-15) description, paragraphs 53-162 | 6-7 |
| A | CN 101742625 A (HUAWEI TECHNOLOGIES CO., LTD.) 16 June 2010 (2010-06-16) entire document | 1-18 |
| A | CN 113891444 A (CHINA UNITED NETWORK COMMUNICATIONS GROUP CO., LTD.) 04 January 2022 (2022-01-04) entire document | 1-18 |
| A | CN 108901063 A (COMBA TELECOM SYSTEMS (CHINA) CO., LTD. et al.) 27 November 2018 (2018-11-27) entire document | 1-18 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 September 2024** | **27 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/100959**

| Patent document cited in search report | | | Publication date (day/month/year) | Patent family member(s) | | | Publication date (day/month/year) |
|---|---|---|---|---|---|---|---|
| CN | 107027178 | A | 08 August 2017 | WO | 2017133220 | A1 | 10 August 2017 |
| US | 2023189218 | A1 | 15 June 2023 | EP | 4135436 | A1 | 15 February 2023 |
| | | | | EP | 4135436 | A4 | 18 October 2023 |
| | | | | KR | 20210142481 | A | 25 November 2021 |
| | | | | WO | 2021235803 | A1 | 25 November 2021 |
| CN | 101742625 | A | 16 June 2010 | | None | | |
| CN | 113891444 | A | 04 January 2022 | | None | | |
| CN | 108901063 | A | 27 November 2018 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310861575